# EUROPEAN PATENT APPLICATION

(11) **EP 4 730 868 A1**
(43) Date of publication of application: **22.04.2026**
(21) Application number: 24850808.7
(22) Date of filing: 25.07.2024
(51) Int. Cl.: H04W 36/16, H04W 16/28

(54) **COMMUNICATION METHOD AND APPARATUS, AND TERMINAL AND NETWORK DEVICE**

(30) Priority: 09.08.2023 CN 202310999771
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHAI, Li, Beijing 100032 (CN)
(74) Representative: Murgitroyd & Company
(86) International application number: PCT/CN2024/107534
(87) International publication number: WO 2025/031159

(57) **Abstract**

This disclosure provides a communication method and apparatus, user equipment, and network device. The method includes: obtaining first information and/or a first signal sent by a network device, the first information and/or the first signal being used for indicating a service area and/or a coverage area provided by a first target object, and/or, the first information being used for indicating a relevant operation to be performed; and performing the relevant operation according to the first information and/or the first signal; the relevant operation includes one or more of satellite handover, cell handover, roaming request, beam switching, and uplink/downlink synchronization.

## Description

### CROSS-REFERENCE TO RELATED APPLICATION

This application claims priority to Chinese Patent Application No. 202310999771.5, filed in China on August 9, 2023, disclosure of which is incorporated herein by reference in its entirety.

### TECHNICAL FIELD

This disclosure relates to the field of radio technology, and in particular to a communication method and apparatus, user equipment and network device.

### BACKGROUND

Typically, user equipment (UE) triggers operations such as measurement and reporting and cell handover based on detection of changes in the reference signal received power (RSRP)/reference signal received quality (RSRQ) corresponding to the physical cell identity (PCI), or based on sensing of changes in the RSRP/RSRQ corresponding to the beam, i.e., the channel-state information reference signal (CSI-RS) or the synchronization signal block (SSB), associated with the PCI.

However, for non-terrestrial network (NTN) systems, such as satellite network systems, there are situations where the cell coverage area is large (coverage radius may be up to 1,000 kilometers) and spans multiple regions or countries. If the beams within one satellite coverage are the same, then the PCIs used are the same. In this scenario, because UE remains in the same beam coverage even in different regions or countries, it is impossible for the UE to clearly distinguish the boundaries of the wireless coverage if the conventional approach for triggering measurement and reporting and cell handover by detecting changes in the RSRP/RSRQ corresponding to the PCI or sensing changes in the RSRP/RSRQ corresponding to the CSI-RS or SSB beams associated with the PCI is adopted. Therefore, cell handovers among multiple regions and areas cannot be achieved, and refused connection may result.

On the other hand, for special UE such as drones, due to the varying channel models and propagation characteristics caused by their flight characteristics (e.g., different flight speeds and flight altitudes), the conventional physical cell modes and resource sharing modes of all UEs in the cell will bring serious uplink interference to UEs on the ground. The drones themselves will also suffer from significant downlink interference. At the same time, a lot of cell change procedures such as handover and reestablishment will generate a lot of service interruptions and signaling overheads, which is not conducive to improvement of the service performance of drones. In particular, due to the different channel models and propagation characteristics caused by drones' flight characteristics (different flight speeds and flight altitudes), the continuous change of planar cells, especially for fast-moving drones, or drones during takeoff and landing, too much complexities are brought to the management of handover, access and neighboring cell relationship of drones.

### SUMMARY

The technical solution in this disclosure is to provide a communication method and apparatus, user equipment, and network device, to solve the problem in the related art that UEs cannot perform cell handover between different regions or areas within the network coverage of NTN, resulting in refused connection.

An embodiment of this disclosure provides a communication method, wherein the method is performed by a user equipment and includes:
obtaining first information and/or a first signal sent by a network device; the first information and/or the first signal is used for determining a service area and/or a coverage area provided by a first target object, and/or the first information is used for indicating a relevant operation to be performed; wherein, the first target object includes one or more of: at least one beam, at least one cell and at least one satellite; and
performing the relevant operation based on the first information and/or the first signal; wherein the relevant operation includes one or more of: satellite handover, cell handover, roaming request, beam switching, cell access, and uplink/downlink synchronization.

Optionally, in the communication method, the first signal includes one or more of: a primary synchronization signal, a secondary synchronization signal, and a synchronization signal block (SSB).

Optionally, in the communication method, the first information includes one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

Optionally, in the communication method, the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

Optionally, in the communication method, performing the relevant operation based on the first information includes:
in a case that the service area and/or the coverage area determined based on the first information belongs to a restricted access area for the user equipment, performing the cell handover and/or the roaming request.

Optionally, in the communication method, the first information is indicated by a resource location of the first signal in the at least one beam and/or the at least one cell; wherein, in a case that areas of the at least one beam and/or the at least one cell are different, the first signal is sent at different resource locations.

Optionally, in the communication method, the configuration information indicated by the sixth information includes:
correspondence relationship information, used for indicating a relationship between a resource location where the network device sends the first signal and at least one of a corresponding beam, cell, cell area, satellite service area, or satellite coverage area.

Optionally, in the communication method, the configuration information indicated by the sixth information includes one or more of the following:
one or more of: time information about when the first target object sends SSB, frequency domain location information about where the first target object sends SSB, SSB index information, and channel state information reference signal (CSI-RS) resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB includes one or more of: periodicity, start value, and duration.

Optionally, the communication method further includes:
obtaining the correspondence relationship information through a system message and/or dedicated signaling.

Optionally, the communication method further includes:
differentiating, based on the configuration information indicated by the sixth information, different first target objects that send the same PCI and/or the same SSB sequence;
performing a corresponding measurement and/or handover operation according to the differentiated first target objects.

Optionally, the communication method further includes:
based on one or more of the time difference, frequency offset, and phase difference between an SSB sent by a first satellite reaching the user equipment or the reference position and an SSB sent by a second satellite reaching the user equipment or the reference position, determining whether to merge results of separate measurements of the SSB sent by the first satellite and the SSB sent by the second satellite.

Optionally, in the communication method, based on one or more of the time difference, frequency offset, and phase difference between an SSB sent by a first satellite reaching the user equipment or the reference position and an SSB sent by a second satellite reaching the user equipment or the reference position, determining whether to merge results of separate measurements of the SSB sent by the first satellite and the SSB sent by the second satellite includes:
in a case that a value of at least one of the time difference, frequency offset, or phase difference between the SSB sent by the first satellite reaching the user equipment or the reference position and the SSB sent by the second satellite reaching the user equipment or the reference position is less than or equal to a preset threshold, determining to merge the results of the separate measurements of the SSB sent by the first satellite and the SSB sent by the second satellite.

Optionally, the communication method further includes:
in a case that the value of at least one of the time difference, frequency offset, or phase difference between the SSB sent by the first satellite reaching the user equipment or the reference position and the SSB sent by the second satellite reaching the user equipment or the reference position is greater than the preset threshold, the user equipment performs, on a signal sent by one of the first satellite and the second satellite, one or more of interference processing, puncturing processing, and signal filtering processing.

Optionally, in the communication method, differentiating, based on the configuration information, different first target objects that send the same PCI and/or the same SSB sequence includes:
based on the configuration information indicated by the sixth information, obtaining multiple different measurement configurations configured by a serving cell to the user equipment according to one carrier/frequency band that correspond to areas served by different first target objects; or, obtaining multiple different measurement configurations configured by the serving cell to the user equipment according to one carrier/frequency band; and
based on the multiple different measurement configurations and the measurement configuration information indicated by the seventh information, after performing differentiated measurements at corresponding resource locations, differentiating the different first target objects that send the same PCI and/or the same SSB sequence.

Optionally, in the communication method, the at least one beam and/or the at least one cell each sends a beacon code, the first information is indicated through the beacon code, and the beacon code varies when the service area and/or the coverage area provided by the at least one beam and/or the at least one cell varies.

Optionally, the communication method further includes:
determining, based on a first resource location for sending the first signal in the at least one beam and/or the at least one cell, a second resource location for sending the beacon code;
wherein the second resource location and the first resource location satisfy a quasi-colocation (QCL) relationship.

Optionally, the communication method further includes:
obtaining a first correspondence relationship between the beacon code and the provided service area and/or coverage area through a system message; and
determining an indication area of the first information based on the first correspondence relationship and the beacon code.

Optionally, the communication method further includes:
an access stratum (AS) of the user equipment parses the beacon code sent by the at least one beam and/or the at least one cell;
a radio resource control (RRC) layer of the user equipment obtains the beacon code parsed by the access stratum and determines the corresponding indication area based on the beacon code;
a non-access stratum (NAS) of the user equipment obtains the indication area, determines whether the indication area belongs to a restricted access area for the user equipment, and determines whether to perform a corresponding relevant operation.

Optionally, the communication method further includes:
obtaining a first threshold value for a signal measurement result obtained by the user equipment within an access allowed area;
determining whether a measurement result of a signal of the at least one beam and/or the at least one cell is greater than the first threshold value; and
in a case that the measurement result of the signal of the at least one beam and/or the at least one cell is greater than the first threshold value, and the service area and/or coverage area determined according to the first information in the at least one beam and/or the at least one cell belongs to the access allowed area of the user equipment, sending a signal to the network device and/or receiving a signal from the network device, and not performing the relevant operation.

Optionally, in the communication method, the at least one beam and/or the at least one cell each sends a cell global identifier (CGI), the first information is indicated through the CGI, and the CGI varies when the service area and/or the coverage area provided by the at least one beam and/or the at least one cell varies.

An embodiment of this disclosure further provides a communication method, wherein the method is performed by a network device and includes:
sending first information and/or a first signal to a user equipment; wherein the first information and/or the first signal is used for determining a service area and/or a coverage area provided by a first target object, and/or the first information is used for indicating a relevant operation to be performed; wherein, the first target object includes one or more of: at least one beam, at least one cell and at least one satellite.

Optionally, in the communication method, the first signal includes one or more of: a primary synchronization signal, a secondary synchronization signal, and a synchronization signal block (SSB).

Optionally, in the communication method, the first information includes one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

Optionally, in the communication method, the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

Optionally, in the communication method, the first information is indicated by a resource location of the first signal in the at least one beam and/or the at least one cell; wherein, in a case that areas of the at least one beam and/or the at least one cell are different, the first signal is sent at different resource locations.

Optionally, in the communication method, the configuration information indicated by the sixth information includes:
correspondence relationship information, used for indicating a relationship between a resource location where the network device sends the first signal and at least one of a corresponding beam, cell, cell area, satellite service area, or satellite coverage area.

Optionally, in the communication method, the configuration information indicated by the sixth information includes one or more of the following:
one or more of: time information about when the first target object sends SSB, frequency domain location information about where the first target object sends SSB, SSB index information, and CSI-RS resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB includes one or more of: periodicity, start value, and duration.

Optionally, in the communication method, the at least one beam and/or the at least one cell each sends a beacon code, the first information is indicated through the beacon code, and the beacon code varies when the service area and/or the coverage area provided by the at least one beam and/or the at least one cell varies.

Optionally, the communication method further includes:
determining, based on a first resource location for sending the first signal in the at least one beam and/or the at least one cell, a second resource location for sending the beacon code;
wherein the second resource location and the first resource location satisfy a quasi-colocation (QCL) relationship.

Optionally, the communication method further includes:
sending a first correspondence relationship between the beacon code and the provided service area and/or coverage area through a system message.

Optionally, in the communication method, the at least one beam and/or the at least one cell each sends a cell global identifier (CGI), the first information is indicated through the CGI, and the CGI varies when the service area and/or the coverage area provided by the at least one beam and/or the at least one cell varies.

An embodiment of this disclosure further provides a user equipment, which includes a transceiver and a processor, wherein,
the transceiver is used for obtaining first information and/or a first signal sent by a network device; wherein the first information and/or the first signal is used for determining a service area and/or a coverage area provided by a first target object, and/or the first information is used for indicating a relevant operation to be performed; wherein, the first target object includes one or more of at least one beam, at least one cell, and at least one satellite;
the processor is used for performing the relevant operation based on the first information and/or the first signal; wherein the relevant operation includes one or more of: satellite handover, cell handover, roaming request, beam switching, cell access, and uplink/downlink synchronization.

An embodiment of this disclosure further provides a network device, which includes a transceiver, the transceiver being used for:
sending first information and/or a first signal to a user equipment; wherein the first information and/or the first signal is used for determining a service area and/or a coverage area provided by a first target object, and/or the first information is used for indicating a relevant operation to be performed; wherein, the first target object includes one or more of: at least one beam, at least one cell and at least one satellite.

An embodiment of this disclosure further provides a communication apparatus, wherein the apparatus is applied to a user equipment and includes:
an obtaining unit, configured to obtain first information and/or a first signal sent by a network device; the first information and/or the first signal is used for determining a service area and/or a coverage area provided by a first target object, and/or the first information is used for indicating a relevant operation to be performed; wherein, the first target object includes one or more of at least one beam, at least one cell, and at least one satellite;
an access unit, configured to perform the relevant operation based on the first information and/or the first signal; wherein the relevant operation includes one or more of: satellite handover, cell handover, roaming request, beam switching, cell access, and uplink/downlink synchronization.

An embodiment of this disclosure further provides a communication apparatus, wherein the apparatus is applied to a network device and includes:
a sending unit, configured to send first information and/or a first signal to a user equipment; wherein the first information and/or the first signal is used for determining a service area and/or a coverage area provided by a first target object, and/or the first information is used for indicating a relevant operation to be performed; wherein, the first target object includes one or more of: at least one beam, at least one cell and at least one satellite.

An embodiment of this disclosure further provides a user equipment, which includes a processor, a memory, and a program stored in the memory and executable on the processor, wherein the program, when executed by the processor, implements the foregoing communication method.

An embodiment of this disclosure further provides a network device, which includes a processor, a memory, and a program stored in the memory and executable on the processor, wherein the program, when executed by the processor, implements the foregoing communication method.

An embodiment of this disclosure further provides a readable storage medium, wherein a program is stored on the readable storage medium, and when executed by a processor, the program implements the steps in the foregoing communication method. At least one of the above technical solutions of this disclosure has the following beneficial effects.

According to the communication method described in embodiments of this disclosure, first information and/or a first signal sent by a network device is obtained; the first information and/or the first signal is used for determining a service area and/or a coverage area provided by a first target object, and/or the first information is used for indicating the relevant operations to be performed, so that the user equipment can determine whether the provided area belongs to a restricted access area for the user equipment based on the first information and/or the first signal, and/or obtain the relevant operations to be performed, so as to further determine whether to perform satellite handover, cell handover, roaming request, beam switching and/or uplink/downlink synchronization, to avoid refused connection.

### BRIEF DESCRIPTION OF THE DRAWINGS

Fig. 1 is a flowchart illustrating a communication method according to an embodiment of this disclosure;
Fig. 2 is a flowchart illustrating a communication method according to another embodiment of this disclosure;
Fig. 3 is a schematic structural diagram of a user equipment according to an embodiment of this disclosure;
Fig. 4 is a schematic structural diagram of a network device according to an embodiment of this disclosure;
Fig. 5 is a schematic structural diagram of a communication apparatus according to an embodiment of this disclosure;
Fig. 6 is a schematic structural diagram of a communication apparatus according to another embodiment of this disclosure.

### DETAILED DESCRIPTION

To make the technical problems, technical solutions and advantages to be solved by this disclosure clearer, a detailed description will be given below in conjunction with the accompanying drawings and specific embodiments.

To address the problem that, within the network coverage area of an NTN, in scenarios where satellite changes but physical cell ID remain constant, the user equipment cannot identify the change of satellite, and thus cannot perform differentiated measurements on cells with the same cell ID of different satellites and/or cannot perform timely uplink/downlink resynchronization, thereby resulting in refused connection, this disclosure provides a communication method. This method obtains first information and/or a first signal sent by a network device. The first information and/or the first signal are used to determine a service area and/or a coverage area provided by a first target object, and/or to indicate a relevant operation to be performed. This allows the user equipment to perform the relevant operation based on the first information and/or the first signal, thereby avoiding refused connection during cell handover between different regions or areas.

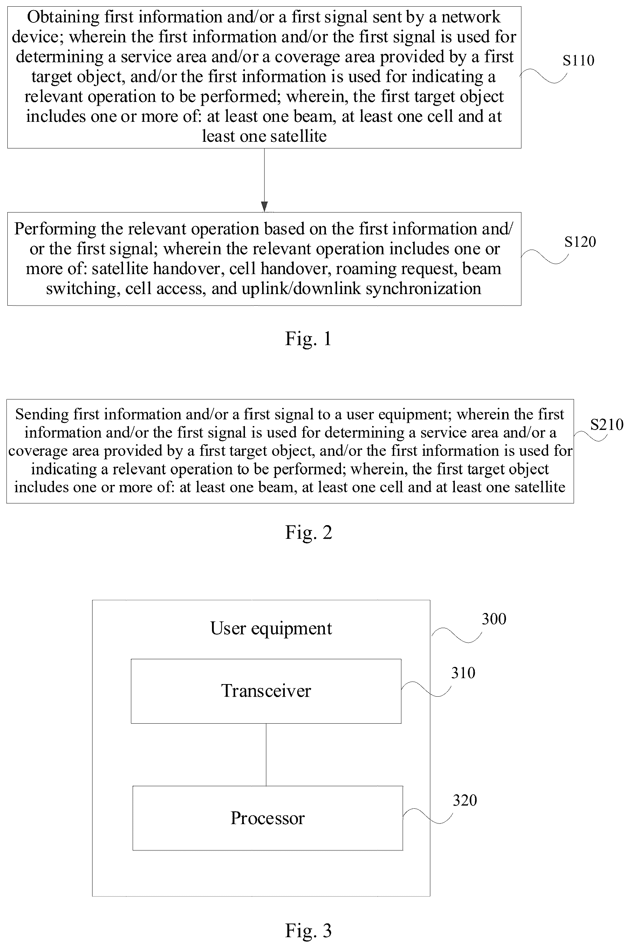

An embodiment of this disclosure provides a communication method performed by a user equipment, as shown in Fig. 1, the method including:
S110, obtaining first information and/or a first signal sent by a network device; wherein the first information and/or the first signal is used for determining a service area and/or a coverage area provided by a first target object, and/or the first information is used for indicating a relevant operation to be performed; wherein, the first target object includes one or more of: at least one beam, at least one cell and at least one satellite; and
S120, performing the relevant operation based on the first information and/or the first signal; wherein the relevant operation includes one or more of: satellite handover, cell handover, roaming request, beam switching, cell access, and uplink/downlink synchronization.

Optionally, the first signal includes one or more of the following: a primary synchronization signal, a secondary synchronization signal, and a synchronization signal block (SSB).

In the communication method according to the embodiments of this disclosure, optionally, the network device in the non-terrestrial network (NTN) can be a satellite base station. Beams and/or cells within the network coverage area of a single satellite base station are provided with the same PCI.

In an implementation, the first information includes second information, which is used for indicating the area information of the service area and/or coverage area. The user equipment can determine whether the area indicated by the first information belongs to a restricted access area for the user equipment based on the area information in the second information, to further determine whether it is necessary to perform one or more of satellite handover, cell handover, roaming request, beam switching and uplink/downlink synchronization, so as to avoid refused connection.

Optionally, the second information includes one or more of the following: PCI, SSB, system message information, virtual cell identifier, and cell global identifier.

In another implementation, the service area and/or coverage area provided by the first target object can be determined based on the first signal. The first signal includes one or more of the primary synchronization signal, the secondary synchronization signal, and the synchronization signal block (SSB). The user equipment can determine whether the area indicated by the first signal belongs to a restricted access area for the user equipment, to further determine whether it is necessary to perform one or more of the following: satellite handover, cell handover, roaming request, beam switching, and uplink/downlink synchronization, in order to avoid refused connection.

In another implementation, optionally, the first information includes one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

Based on the second to seventh information mentioned above, the user equipment is able to differentiate between different beams/cells/serving satellites that send the same PCI and/or the same SSB sequence, in order to avoid errors in the evaluation of the measurement signals and thus avoid refused connection during cell handover between different regions or areas.

Specifically, based on the information about change of a satellite providing coverage and/or services to the user equipment indicated by the third information, and/or information about a satellite providing coverage and/or services to the user equipment after satellite handover indicated by the fourth information, and/or the relevant operations performed by the user equipment indicated by the fifth information, the user equipment may correctly perform one of satellite handover, cell handover, roaming request, beam switching, and uplink/downlink synchronization; and based on configuration information for the first target object to provide services and/or coverage indicated by the sixth information, the user equipment may perform differentiated measurements on different beams/cells/serving satellites that send the same PCI/SSB sequence, thus avoiding errors in the evaluation of the measurement signals.

In the communication method according to the embodiment of this disclosure, in order to deal with the problem that when the coverage area of the cell/beam of a satellite base station is large and spans across multiple regions and/or countries, the user equipment cannot clearly distinguish the coverage boundary of the beam and/or cell sent by the network device, and the area of the beam and/or cell belongs to a restricted access area for the user equipment, resulting in refused connection, the first information sent by the network device according to the embodiment of this disclosure indicates the service area and/or coverage area of at least one beam, at least one cell, and at least one satellite, so that the user equipment can determine whether the service area and/or coverage area of at least one beam, at least one cell, and at least one satellite belongs to a restricted access area for the user equipment based on the first information.

In another implementation scenario, during satellite changes within a certain area, the rapid movement of satellites can cause the satellite for the area to change every few seconds or minutes, resulting in frequent Layer 3 handovers for stationary UEs. Therefore, when using the technology that the physical cell ID remains unchanged despite satellite changes, in scenarios where the physical cell ID remains the same when satellite changes, the user equipment cannot recognize the satellite changes because the physical cell ID remains unchanged. This leads to the user equipment being unable to perform differentiated measurements of different satellites' cells/beams with the same cell ID or/and being unable to perform timely uplink and downlink resynchronization, resulting in service interruption. To address this issue, in the embodiment of this disclosure, the network device sends first information to the user equipment to indicate relevant information about the service area and/or coverage area provided by the first target object. This allows the user equipment to determine, based on the first information, the change in satellite and/or information about new satellite within the service area and/or coverage area provided by the first target object, thereby performing at least one of satellite handover, cell handover, roaming request, and beam switching.

In the embodiments of the disclosure, it should be noted that the service area and/or coverage area can be a range defined by regional or national boundaries; and/or, the service area and/or coverage area can be a range covered by a satellite within a certain period of time. Optionally, the area covered by a satellite within a certain period of time may be covered by another satellite at another time; the coverage areas of two satellites may overlap or not overlap.

In one implementation of the communication method according to the embodiment of this disclosure, the network device sends the same first signal (including at least one of signaling, signal, or data) for at least one beam, at least one cell, and/or at least one satellite.

Optionally, the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

In the embodiment of this disclosure, the area information sent by the network device and indicating the service area and/or coverage area provided by at least one beam, at least one cell and/or at least one satellite is indicated (or embodied) through the resource location for sending the first signal. For different areas of the service area and/or coverage area provided by at least one beam, at least one cell and/or at least one satellite, the first signal is sent at different resource locations.

It should be noted that, in this embodiment of the present disclosure, optionally, the resource location for sending the first signal indicates the service area and/or coverage area provided by the first target object, then the scheme of using the first information to determine the service area and/or coverage area provided by the first target object may be determined in the embodiment of the present disclosure.

Optionally, the network device can interact with a core network element to obtain area information of different areas from the application layer, and send the first signal at different resource locations to correspond to different respective areas.

In this implementation, although the first signal sent by the network device is the same for different areas, the user equipment can identify different areas based on the different physical resources used by the network device to transmit the first signal. Using this implementation, different service areas and/or coverage areas are indicated based on the different resource locations used for sending the first signal corresponding to at least one beam, at least one cell, and at least one satellite.

Optionally, the resource location includes, but is not limited to, the location of physical resource block (PRB).

In another implementation, the first information corresponding to the service/coverage area provided by at least one beam and/or cell, and/or at least one satellite includes configuration information (sixth information) for different beams/different cells/different satellites to provide services and/or coverage. The configuration information includes correspondence relationship information, wherein the correspondence relationship information indicates the relationship between the resource location used by the network device to send the first signal and at least one of the objects providing services/coverage, such as the corresponding beam, cell, cell area, and satellite.

For example, the indication information used for indicating the first beam and/or the first cell is the index of the SSB. For instance, there are 64 SSBs for one PCI. The first beam and/or the first cell sends SSBs with indices 1-32 at time moments t1, t3, t5, t7, ... , tm (where m is an odd number), and sends SSBs with indices 33-64 at time moments t2, t4, t6, t8, ... , tn (where n is an even number). Based on the beam/cell's area information/indication identifier, the user equipment distinguishes between different beams/cells/serving satellites that transmit the same PCI/SSB sequence, thereby performing corresponding measurement and/or handover operations.

Alternatively, the user equipment can determine, based on beam/cell's area information/indication identifier, not to merge the SSB measurement results of different serving satellites.

Optionally, the method further includes:
obtaining the correspondence relationship information through a system message (such as SIB message) and/or dedicated signaling.

The configuration information includes one or more of the following:
one or more of: time information about when the first target object sends SSB, frequency domain location information about where the first target object sends SSB, SSB index information, and CSI-RS resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB includes one or more of: periodicity, start value, and duration.

It should be noted that, based on the above configuration information, the correspondence relationship information can be determined. That is, the following correspondence relationship can be determined:
a correspondence relationship between different first target objects and one or more of the following: time information about when the first target objects send SSBs, frequency domain location information about where the first target objects send SSBs, SSB index information, and CSI-RS resource information;
a correspondence relationship between different satellites and one or more of the time difference, frequency offset, and phase difference of the SSBs which are sent by the satellites and arrive at the user equipment or a reference position;
a correspondence relationship between different first target objects and the time information about when the first target objects provide and/or stop services.

Specifically, the configuration information includes one or more of the following:
at least one of: time information about when the first beam and/or the first cell sends SSB, frequency domain location information about where the first beam and/or the first cell sends SSB, SSB index information, or CSI-RS resource information;
at least one of: time information about when the q-th beam and/or the q-th cell sends SSB, frequency domain location information about where the q-th beam and/or the q-th cell sends SSB, SSB index information, or CSI-RS resource information; (q is a natural number greater than 1);
at least one of: the time difference, frequency offset, or phase difference between the SSB sent by the first satellite reaching the user equipment or a reference position and the SSB sent by the second satellite reaching the user equipment or the reference position;
at least one of: time information about when the q-th beam and/or the q-th cell sends SSB, frequency domain location information about where the q-th beam and/or the q-th cell sends SSB, SSB index information, or CSI-RS resource information; (q is a natural number greater than 1);
at least one of: time information about when the first satellite sends SSB, frequency domain location information about where the first satellite sends SSB, SSB index information, or CSI-RS resource information;
at least one of: time information about when the q-th satellite sends SSB, frequency domain location information about where the q-th satellite sends SSB, SSB index information, or CSI-RS resource information; (q is a natural number greater than 1);
time information about when the first beam and/or the first cell and/or the first satellite provides and/or stops service;
time information about when the q-th beam and/or the q-th cell and/or the q-th satellite provides and/or stops service.

Based on the correspondence relationship information and the resource location for sending the first signal, the service area and/or coverage area provided by at least one beam, at least one cell, and at least one satellite can be determined.

Therefore, in this implementation, the correspondence relationship information can correspond to the first information in this disclosure. Based on the combination of the first information and the first signal, the service area and/or coverage area provided by the first target object can be determined.

Specifically, the network device sends a first signal at the resource location corresponding to an area. Based on the received correspondence relationship information between the different areas and the resource locations for sending the first signal, and based on the resource location of the obtained first signal, the user equipment can determine the service area and/or coverage area provided by at least one beam, at least one cell and at least one satellite.

Specifically, based on the correspondence relationship information and the resource location, the user equipment determines the service area and/or coverage area provided by at least one beam, at least one cell, and at least one satellite. The user equipment differentiates different beams/cells/serving satellites that send the same PCI/SSB sequence, thereby performing corresponding measurement and/or handover operations. For example, the user equipment performs differentiated measurements at the corresponding resource locations and explicitly avoids merging the measurement results of SSBs of different serving satellites, thus avoiding errors in the evaluation of measurement signals.

Alternatively, the user equipment determines the service area and/or coverage area provided by at least one beam, at least one cell, and at least one satellite based on the correspondence relationship information and the resource location, and differentiates different beams/cells/serving satellites that send the same PCI/SSB sequence, thereby correctly performing at least one of satellite handover, cell handover, roaming request, or beam handover.

Alternatively, the user equipment determines whether to merge the results of separate measurements of the SSB sent by the first satellite and the SSB sent by the second satellite based on at least one of the time difference, frequency offset, or phase difference between the SSB sent by the first satellite and reaching the user equipment or a reference position and the SSB sent by the second satellite and reaching the user equipment or the reference position.

Specifically, if at least one of the time difference, frequency offset, or phase difference between the SSB sent by the first satellite and reaching the user equipment or the reference position and the SSB sent by the second satellite and reaching the user equipment or the reference position exceeds a certain threshold, the merging will have poor effect, affecting the user equipment's handover decision. Alternatively, if a value of at least one of the time difference, frequency offset, or phase difference between the SSB sent by the first satellite and reaching the user equipment or the reference position and the SSB sent by the second satellite and reaching the user equipment or the reference position exceeds a certain threshold, the user equipment will perform interference processing, puncturing or signal filtering on the signal sent by the other satellite. If the value of at least one of the time difference, frequency offset, or phase difference between the SSB sent by the first satellite and reaching the user equipment or the reference position and the SSB sent by the second satellite and reaching the user equipment or the reference position does not exceed a certain threshold, the merging will have good effect. Optionally, the user equipment can use single frequency network (SFN) technology to perform merged reception.

In an implementation of the embodiment of this disclosure, the method may optionally further include:
differentiating, based on the correspondence relationship information, different first target objects that send the same PCI and/or the same SSB sequence; and
performing a corresponding measurement and/or handover operation according to the differentiated first target objects.

Specifically, the configuration information sent by the serving cell that indicates services and/or coverage provided by the first target object includes correspondence relationship information. Through this correspondence relationship information, different beams/cells/serving satellites sending the same PCI/SSB sequence are differentiated, thus corresponding measurement and/or handover operations may be performed.

Optionally, the serving cell may send configuration information in one or more of the following methods: Method 1: the serving cell, for one carrier/frequency band, configures multiple different measurement configuration information (seventh information) to the user equipment for different beams/different cells/area where different satellites provide services; in this way, the user equipment can differentiate and measure at corresponding resource locations according to the different measurement configuration information, thereby ensuring the correctness of the measurement results.

The measurement configuration information includes SMTC configuration information and/or measurement gap configuration information (which can also be described as a measurement gap or gap pattern). Specifically, the synchronization signal/physical broadcast channel block measurement timing configuration (SMTC) is used for indicating the user equipment's SSB measurement configuration, including periodicity, duration, and offset, and is mainly used for intra-frequency measurement. The length of the measurement gap is the SSB sending time + the radio frequency (RF) modulation time. New Radio (NR) measurement gaps are categorized into per UE (user equipment-based) and per FR (frequency range-based). Per UE measurement gap configuration means that measurements of all to-be-measured frequencies are performed based on a set of measurement gap configuration. Per FR measurement gap configuration means that the user equipment can be configured with two types of measurement gaps simultaneously, which are used for FR1 and FR2 respectively; whether the user equipment supports per FR gaps is reported in the user equipment capability.

In this disclosure, the areas served by different satellites may be the same geographically, may be different geographically, or may be overlapping.

For example, for a single carrier/frequency band, a serving cell may configure multiple different configuration information to the user equipment for the areas served by different satellites:
measurements in the area served by the first satellite correspond to the first measurement configuration;
measurements in the area served by the second satellite correspond to the second measurement configuration;
the measurement offset of the first measurement configuration is different from that of the second measurement configuration, corresponding to t0 and t1 respectively;
then the user equipment can perform differentiated measurements at the corresponding resource locations t0 and t1 according to the different measurement offsets in the different configuration information, thereby ensuring the correctness of the measurement results.

Method 2: for a single carrier/frequency band, the serving cell configures multiple different measurement configuration information to the user equipment.

In this way, the user equipment calculates the time delay difference between the next arriving satellite and the currently serving satellite based on its own location information and satellite ephemeris information. The user equipment then uses this calculated time delay difference to determine the specific area served by the beam/cell/satellite corresponding to the measured results according to different configuration information. Optionally, the user equipment reports the correspondence relationship between the finally selected configuration information and the area served by the beam/cell/satellite to the serving cell, to ensure synchronization of measurement results between the network side and the user equipment side.

For example, for one carrier/frequency band, a serving cell configures multiple different measurement configuration information, namely the first measurement configuration and the second measurement configuration, to the user equipment for the areas served by different satellites. The measurement offsets of the first measurement configuration and the second measurement configuration are different, corresponding to t0 and t1 respectively.

The user equipment uses t0 to measure the current serving satellite (first satellite). Then, based on the user equipment's own location information and the ephemeris information of the first and second satellites, the user equipment calculates the time delay difference between the next arriving second satellite and the current serving satellite (first satellite). The user equipment then determines that the second measurement configuration corresponding to offset t1 corresponds to the measurement reception time window of the SSB of the second satellite. Optionally, the user equipment reports the correspondence relationship between the finally selected measurement configuration information and the area served by the beam/cell/satellite to the serving cell, to ensure synchronization of measurement results between the network side and the user equipment side.

In this way, by adopting this implementation method, the user equipment can perform differentiated measurements at the corresponding resource locations based on different measurement offsets in different measurement configuration information, thereby ensuring the accuracy of the measurement results.

Furthermore, if the two satellites come from different ground observation stations/ground base stations/ground gateways, at least one of configuration information of two satellites whose coverages overlap, SSB or CSI-RS can be exchanged between the ground observation stations/ground base stations/ground gateways via the Xn interface. Specifically, this includes time information, resource code domain information, and/or spatial information. Furthermore, a duration when the satellites' coverages overlap can be exchanged to avoid incorrect measurement results caused by interference, which could lead to handover failure.

Because in terrestrial networks, even if there is overlapping between cells on the same frequency, the overlapping only occurs at the edge. However, in the near-fixed scenario of satellite networks, the overlapping between cells on the same frequency can be full overlapping and cover each other at certain times, which makes the interference problem more serious.

Therefore, based on the above, in the communication method according to this embodiment of the present disclosure, differentiating, based on the configuration information, different first target objects that send the same PCI and/or the same SSB sequence includes:
based on the configuration information, obtaining multiple different measurement configurations configured by a serving cell to the user equipment according to one carrier/frequency band that correspond to areas served by different first target objects; or, obtaining multiple different measurement configurations configured by the serving cell to the user equipment according to one carrier/frequency band; and
based on the multiple different measurement configurations and the measurement configuration information, after performing differentiated measurements at corresponding resource locations, differentiating the different first target objects that send the same PCI and/or the same SSB sequence.

Using the communication method according to the embodiment of this disclosure, the user equipment can determine different areas of at least one beam, at least one cell, and at least one satellite based on the resource location of the first signal during the process of measuring the RSRP/RSRQ value of the first signal. By comparing the current service area and/or coverage area of the beam, cell, and/or satellite with the access allowed area for the user equipment, the user equipment can determine whether the current service area and/or coverage area of the beam, cell, and/or satellite belongs to a legal area. If it is determined that the current service area and/or coverage area is not legal, the user equipment can trigger a relevant operation, such as triggering a cell handover or roaming request, to avoid invalid access or being rejected by the network, which would cause service interruption.

Optionally, in the embodiment of the disclosure, the method further includes: determining whether a measurement result of a signal of the at least one beam, the at least one cell and/or the at least one satellite is greater than the first threshold value. For example, the user equipment measures the SSB in the first signal, obtains the measurement result of at least one of RSRP, RSRQ, signal to interference plus noise ratio (SINR), CSI-RSRP, CSI-RSRQ, and CSI-SINR corresponding to the first signal, and determines whether the measurement result is greater than the first threshold value; wherein, the first threshold value is configured to the user equipment by the network side or determined by the user equipment itself, and CSI denotes channel state information.

If the measurement result is greater than the first threshold value, it is determined whether the service area and/or coverage area provided by at least one beam, at least one cell and/or at least one satellite belongs to the restricted access area for the user equipment.

When a network device sends correspondence relationship information to a user equipment via a system message, optionally, the system message may also include a first threshold value for the signal measurement result obtained by the user equipment within the access allowed area. If the measurement result of the signal of at least one beam, at least one cell, and/or at least one satellite is determined to be greater than the first threshold value, and the provided service area and/or coverage area is determined to belong to the access allowed area for the user equipment based on the first information and/or the first signal, normal signal transmission in the current area is performed, and the relevant operation is not performed.

In the communication method according to the embodiment of this disclosure, if it is determined, based on the first information and/or the first signal, that the service area and/or coverage area provided by at least one beam, at least one cell, and/or at least one satellite belongs to the restricted access area for the user equipment, cell handover and/or roaming request is performed. During cell handover, the user equipment can trigger a source network device to perform cell handover by sending a handover request to the source network device. Specifically, the user equipment performs cell handover, to access an access allowed area near its current location, or switch to a terrestrial network cell.

In the embodiments of this disclosure, the specific process by which the user equipment executes cell handover and roaming request is not the focus of this disclosure and will not be described in detail here.

It should be noted that, in the embodiment of this disclosure, when the coverage area of the target cell after cell handover includes multiple areas, the resource locations for sending the first signal that correspond to different areas within the target cell need to be exchanged between the target cell and the source cell via the Xn interface.

In another implementation of the communication method according to the embodiment of this disclosure, in step S110, the at least one beam and/or the at least one cell each sends a beacon code, wherein the first information is indicated through the beacon code, and the beacon code varies when the service area and/or the coverage area provided by the at least one beam and/or the at least one cell varies.

In this implementation, the information of at least one beam and/or at least one cell sent by the network device, in addition to the first signal, includes a beacon code for differentiating the areas of the beam and/or cell. The beacon code is formed as a two-level physical cell identifier mechanism, and can indicate one area within the coverage area of the network device. The user equipment, by parsing the beacon code in the beam and/or cell, determines whether the service area and/or coverage area provided by the beam and/or cell belongs to a restricted access area for the user equipment based on pre-obtained beacon codes corresponding to different areas.

Optionally, in the implementation, the method further includes:
determining, based on a first resource location for sending the first signal in the at least one beam and/or the at least one cell, a second resource location for sending the beacon code;
wherein the second resource location and the first resource location satisfy a quasi-colocation (QCL) relationship.

When a network device transmits at least one beam and/or at least one cell, the network device sends different beacon codes corresponding to different areas respectively. The sent beacon codes correspond to the areas of at least one beam and/or at least one cell (for example, if the area within the first beam and/or the first cell is divided into n areas, the network sends n beacons that correspond one-to-one with the n areas; or, if the area within the first beam and/or the first cell is divided into n areas, the network sends m beacons that correspond to n areas in an m-to-n correspondence, where m and n are natural numbers greater than 0 hereinafter). Optionally, the beacon codes and the corresponding areas satisfy a second correspondence relationship. The user equipment can obtain the first correspondence relationship between the beacon codes and the corresponding areas through a system message, and determine the area indicated by the area indication information based on the first correspondence relationship and the beacon code.

In addition, when the network device transmits at least one beam and/or at least one cell, the network device sends a first signal at a first resource location and sends a beacon code at a second resource location; wherein the second resource location and the first resource location satisfy a quasi-co-location (QCL) relationship.

Specifically, the network device sends a beacon code at a second resource location satisfying the QCL relationship and near the first resource location where the first signal is sent.

The user equipment can obtain the second resource location and/or the QCL relationship through a system message.

In this way, the user equipment can identify the beacon code in the beam and/or cell at the second resource location based on the second resource location and/or the QCL relationship obtained in advance, and based on the first resource location for sending the first signal in at least one beam and/or at least one cell.

Optionally, in the implementation, the method further includes:
an access stratum (AS) of the user equipment parses the beacon code sent by the at least one beam and/or the at least one cell;
a radio resource control (RRC) layer of the user equipment obtains the beacon code parsed by the access stratum and determines the corresponding indication area based on the beacon code;
a non-access stratum (NAS) of the user equipment obtains the indication area, determines whether the indication area belongs to a restricted access area for the user equipment, and determines whether to perform a corresponding relevant operation.

Specifically, after the user equipment's access stratum parses the beacon code of the beam and/or cell and the user equipment obtains the first resource location for sending the first signal of the beam and/or cell, the user equipment sends the parsed beacon code and the first resource location for sending the first signal to the user equipment's RRC layer. The RRC layer of the user equipment determines the indication area corresponding to the beacon code in the beam and/or cell based on the beacon code and the pre-obtained first correspondence relationship between the beacon codes and the corresponding areas, and sends the determined indication area to the NAS layer. The NAS layer obtains the indication area, determines whether the indication area belongs to a restricted access area for the user equipment, and determines whether to execute a cell handover and/or roaming request, and sends the determination result to the user equipment's AS layer. The AS layer then sends a cell handover request and/or roaming request to the network device.

Similar to the previous implementation, in this implementation, optionally, after cell handover, if the coverage area of the target cell includes multiple areas, the target cell and the source cell need to exchange the correspondence relationship between beacon codes and different areas within the target cell through the Xn interface.

In addition, when the network device sends the first correspondence relationship to the user equipment through a system message, the system message may optionally include a first threshold value of the signal measurement result obtained by the user equipment in an access allowed area. If the measurement result of the signal of the at least one beam and/or at least one cell is determined to be greater than the first threshold value based on the first threshold value, and if the service area and/or coverage area of the beam and/or cell is determined to belong to the access allowed area for the user equipment, normal signal transmission is performed in the current area.

In another implementation of the communication method according to the embodiment of this disclosure, optionally, the at least one beam and/or the at least one cell each include a cell global identifier (CGI), wherein the first information is indicated through the CGI, and the CGI varies when the service area and/or the coverage area provided by the at least one beam and/or the at least one cell varies (for example, if the area within the first beam and/or the first cell is divided into n areas, then the network sends n CGIs corresponding one-to-one with the n areas; or, if the area within the first beam and/or the first cell is divided into n areas, then the network sends m CGIs corresponding to the n areas in an m-to-n correspondence, where m and n are natural numbers greater than 0 hereinafter).

Optionally, the first information carries time information about when different areas are served;
or, the network informs information about the time difference between when different areas are served.

In this implementation, the first information of the at least one beam and/or the at least one cell sent by the network device includes PCI and CGI, wherein the CGI corresponds to an area of the at least one beam and/or the at least one cell, and different areas correspond to different CGIs. Thus, the user equipment determines whether handover and/or roaming is required based on the received CGI in the at least one beam and/or the at least one cell (and optionally, the current location).

Optionally, the user equipment can obtain the Global Navigation Satellite System (GNSS) location in the connected mode, or obtain its location by exiting connected mode and entering idle mode, or obtain the GNSS location by starting the GAP for reading the GNSS.

Specifically, when a user equipment performs a cell handover, the user equipment can access an access allowed area near its current location, or switch to a terrestrial network cell.

It should be noted that, in the embodiments of this disclosure, the specific implementation in which the service area and/or coverage area provided by the first target object can be determined through the first information and/or first signal sent by the network device is merely an illustrative example, and specific embodiments of this disclosure are not limited thereto.

An embodiment of this disclosure further provides a communication method performed by a network device, as shown in Fig. 2, the method including:
S210, sending first information and/or a first signal to a user equipment; wherein the first information and/or the first signal is used for determining a service area and/or a coverage area provided by a first target object, and/or the first information is used for indicating a relevant operation to be performed; wherein, the first target object includes one or more of: at least one beam, at least one cell and at least one satellite.

In the communication method according to the embodiment of this disclosure, a network device sends first information and/or a first signal to a user equipment. The first information and/or the first signal is used to determine a service area and/or a coverage area provided by a first target object, and/or to indicate a relevant operation to be performed. This allows the user equipment to determine whether the provided area belongs to a restricted access area for the user equipment based on the first information and/or the first signal, and/or to obtain the relevant operation to be performed, in order to further determine whether satellite handover, cell handover, roaming request, beam switching, and/or uplink/downlink synchronization need to be performed, so as to avoid refused connection.

Optionally, in the communication method, the first signal includes one or more of: a primary synchronization signal, a secondary synchronization signal, and a synchronization signal block (SSB).

Optionally, in the communication method, the first information includes one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

Optionally, in the communication method, the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

Optionally, in the communication method, the first information is indicated by a resource location of the first signal in the at least one beam and/or the at least one cell; wherein, in a case that areas of the at least one beam and/or the at least one cell are different, the first signal is sent at different resource locations.

Optionally, in the communication method, the configuration information includes:
correspondence relationship information, used for indicating a relationship between a resource location where the network device sends the first signal and at least one of a corresponding beam, cell, cell area, satellite service area, or satellite coverage area.

Optionally, in the communication method, the configuration information includes one or more of the following:
one or more of: time information about when the first target object sends SSB, frequency domain location information about where the first target object sends SSB, SSB index information, and CSI-RS resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB includes one or more of: periodicity, start value, and duration.

Optionally, in the communication method, the at least one beam and/or the at least one cell each sends a beacon code, the first information is indicated through the beacon code, and the beacon code varies when the service area and/or the coverage area provided by the at least one beam and/or the at least one cell varies.

Optionally, the communication method further includes:
determining, based on a first resource location for sending the first signal in the at least one beam and/or the at least one cell, a second resource location for sending the beacon code;
wherein the second resource location and the first resource location satisfy a quasi-colocation (QCL) relationship.

Optionally, the communication method further includes:
sending a first correspondence relationship between the beacon code and the provided service area and/or coverage area through a system message.

Optionally, in the communication method, the at least one beam and/or the at least one cell each sends a cell global identifier (CGI), the first information is indicated through the CGI, and the CGI varies when the service area and/or the coverage area provided by the at least one beam and/or the at least one cell varies.

For the specific implementations of the communication method performed by the network device, references may be made to the detailed description of the method performed by UE; repeated description is omitted.

An embodiment of this disclosure further provides a user equipment, as shown in Fig. 3, the user equipment 300 includes a transceiver 310 and a processor 320, wherein,
the transceiver 310 is used for obtaining first information and/or a first signal sent by a network device; wherein the first information and/or the first signal is used for determining a service area and/or a coverage area provided by a first target object, and/or the first information is used for indicating a relevant operation to be performed; wherein, the first target object includes one or more of at least one beam, at least one cell, and at least one satellite; and
the processor 320 is used for performing the relevant operation based on the first information and/or the first signal; wherein the relevant operation includes one or more of: satellite handover, cell handover, roaming request, beam switching, cell access, and uplink/downlink synchronization.

Optionally, in the user equipment, the first signal includes one or more of: a primary synchronization signal, a secondary synchronization signal, and a synchronization signal block (SSB).

Optionally, in the user equipment, the first information includes one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

Optionally, in the user equipment, the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

Optionally, in the user equipment, that the processor 320 performs the relevant operation based on the first information includes:
in a case that the service area and/or the coverage area determined based on the first information belongs to a restricted access area for the user equipment, performing the cell handover and/or the roaming request.

Optionally, in the user equipment, the first information is indicated by a resource location of the first signal in the at least one beam and/or the at least one cell; wherein, in a case that areas of the at least one beam and/or the at least one cell are different, the first signal is sent at different resource locations.

Optionally, in the user equipment, the configuration information includes:
correspondence relationship information, used for indicating a relationship between a resource location where the network device sends the first signal and at least one of a corresponding beam, cell, cell area, satellite service area, or satellite coverage area.

Optionally, in the user equipment, the configuration information includes one or more of the following:
one or more of: time information about when the first target object sends SSB, frequency domain location information about where the first target object sends SSB, SSB index information, and CSI-RS resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB includes one or more of: periodicity, start value, and duration.

Optionally, in the user equipment, the processor 320 is further used for:
obtaining the correspondence relationship information through a system message and/or dedicated signaling.

Optionally, in the user equipment, the processor 320 is further used for:
differentiating, based on the configuration information, the different first target objects that send the same PCI and/or the same SSB sequence; and
performing a corresponding measurement and/or handover operation according to the differentiated first target objects.

Optionally, in the user equipment, the processor 320 is further used for:
based on one or more of the time difference, frequency offset, and phase difference between an SSB sent by a first satellite reaching the user equipment or the reference position and an SSB sent by a second satellite reaching the user equipment or the reference position, determining whether to merge results of separate measurements of the SSB sent by the first satellite and the SSB sent by the second satellite.

Optionally, in the user equipment, that the processor 320, based on one or more of the time difference, frequency offset, and phase difference between an SSB sent by a first satellite reaching the user equipment or the reference position and an SSB sent by a second satellite reaching the user equipment or the reference position, determines whether to merge results of separate measurements of the SSB sent by the first satellite and the SSB sent by the second satellite includes:
in a case that a value of at least one of the time difference, frequency offset, or phase difference between the SSB sent by the first satellite reaching the user equipment or the reference position and the SSB sent by the second satellite reaching the user equipment or the reference position is less than or equal to a preset threshold, determining to merge the results of the separate measurements of the SSB sent by the first satellite and the SSB sent by the second satellite.

Optionally, in the user equipment, the processor 320 is further used for:
in a case that the value of at least one of the time difference, frequency offset, or phase difference between the SSB sent by the first satellite reaching the user equipment or the reference position and the SSB sent by the second satellite reaching the user equipment or the reference position is greater than the preset threshold, performing one or more of interference processing, puncturing processing, and signal filtering processing on the signal sent by one of the first satellite and the second satellite.

Optionally, in the user equipment, that the processor 320 differentiates different first target objects sending the same PCI and/or the same SSB sequence according to the configuration information includes:
based on the configuration information, obtaining multiple different measurement configurations configured by a serving cell to the user equipment according to one carrier/frequency band that correspond to areas served by different first target objects; or, obtaining multiple different measurement configurations configured by the serving cell to the user equipment according to one carrier/frequency band; and
based on the multiple different measurement configurations and the measurement configuration information, after performing differentiated measurements at corresponding resource locations, differentiating the different first target objects that send the same PCI and/or the same SSB sequence.

Optionally, in the user equipment, the at least one beam and/or the at least one cell each sends a beacon code, the first information is indicated through the beacon code, and the beacon code varies when the service area and/or the coverage area provided by the at least one beam and/or the at least one cell varies.

Optionally, in the user equipment, the processor 320 is further used for:
determining, based on a first resource location for sending the first signal in the at least one beam and/or the at least one cell, a second resource location for sending the beacon code;
wherein the second resource location and the first resource location satisfy a quasi-colocation (QCL) relationship.

Optionally, in the user equipment, the processor 320 is further used for:
obtaining a first correspondence relationship between the beacon code and the provided service area and/or coverage area through a system message; and
determining an indication area of the first information based on the first correspondence relationship and the beacon code.

Optionally, in the user equipment,
an access stratum (AS) of the user equipment parses the beacon code in the at least one beam and/or the at least one cell;
a radio resource control (RRC) layer of the user equipment obtains the beacon code parsed by the access stratum and determines the corresponding indication area based on the beacon code;
a non-access stratum (NAS) of the user equipment obtains the indication area, determines whether the indication area belongs to a restricted access area for the user equipment, and determines whether to perform a corresponding relevant operation.

Optionally, in the user equipment, the processor 320 is further used for:
obtaining a first threshold value for a signal measurement result obtained by the user equipment within an access allowed area;
determining whether a measurement result of a signal of the at least one beam and/or the at least one cell is greater than the first threshold value; and
in a case that the measurement result of the signal of the at least one beam and/or the at least one cell is greater than the first threshold value, and the service area and/or coverage area determined according to the first information in the at least one beam and/or the at least one cell belongs to the access allowed area of the user equipment, sending a signal to the network device and/or receiving a signal from the network device, and not performing the relevant operation.

Optionally, the at least one beam and/or the at least one cell each sends a cell global identifier (CGI), wherein the first information is indicated through the CGI, and the CGI varies when the service area and/or the coverage area provided by the at least one beam and/or the at least one cell varies.

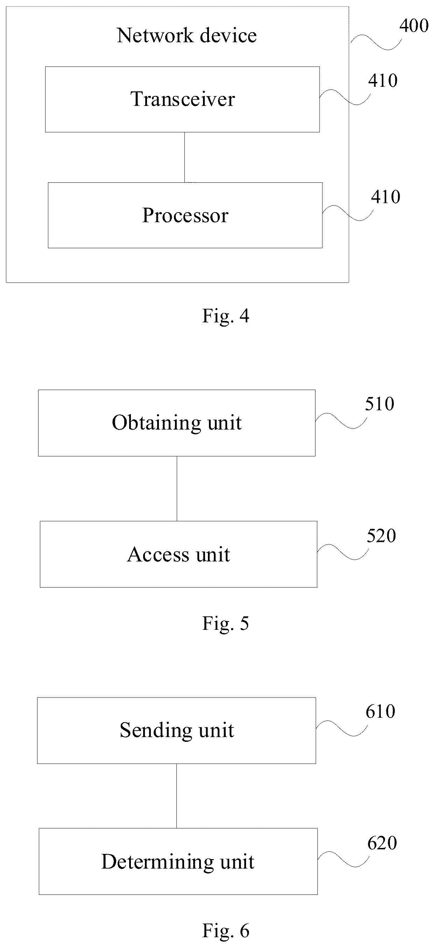

An embodiment of this disclosure further provides a network device, as shown in Fig. 4, the network device 400 including a transceiver 410 used for:
sending first information and/or a first signal to a user equipment; wherein the first information and/or the first signal is used for determining a service area and/or a coverage area provided by a first target object, and/or the first information is used for indicating a relevant operation to be performed; wherein, the first target object includes one or more of: at least one beam, at least one cell and at least one satellite.

Optionally, in the network device, the first signal includes one or more of: a primary synchronization signal, a secondary synchronization signal, and a synchronization signal block (SSB).

Optionally, in the network device, the first information includes one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

Optionally, in the network device, the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

Optionally, in the network device, the first information is indicated by a resource location of the first signal in the at least one beam and/or the at least one cell; wherein, in a case that areas of the at least one beam and/or the at least one cell are different, the first signal is sent at different resource locations.

Optionally, in the network device, the configuration information includes:
correspondence relationship information, used for indicating a relationship between a resource location where the network device sends the first signal and at least one of a corresponding beam, cell, cell area, satellite service area, or satellite coverage area.

Optionally, in the network device, the configuration information includes one or more of the following:
one or more of: time information about when the first target object sends SSB, frequency domain location information about where the first target object sends SSB, SSB index information, and CSI-RS resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB includes one or more of: periodicity, start value, and duration.

Optionally, in the network device, the at least one beam and/or the at least one cell each send a beacon code, wherein the first information is indicated through the beacon code, and the beacon code varies when the service area and/or the coverage area provided by the at least one beam and/or the at least one cell varies.

Optionally, the network device further includes a processor 420 used for:
determining, based on a first resource location for sending the first signal in the at least one beam and/or the at least one cell, a second resource location for sending the beacon code;
wherein the second resource location and the first resource location satisfy a quasi-colocation (QCL) relationship.

Optionally, in the network device, the transceiver 410 is further used for:
sending a first correspondence relationship between the beacon code and the provided service area and/or coverage area through a system message.

Optionally, in the network device, the at least one beam and/or the at least one cell each sends a cell global identifier (CGI), the first information is indicated through the CGI, and the CGI varies when the service area and/or the coverage area provided by the at least one beam and/or the at least one cell varies.

An embodiment of this disclosure further provides a communication apparatus, applied to a user equipment, as shown in Fig. 5, the apparatus including:
an obtaining unit 510, configured to obtain first information and/or a first signal sent by a network device; the first information and/or the first signal is used for determining a service area and/or a coverage area provided by a first target object, and/or the first information is used for indicating a relevant operation to be performed; wherein, the first target object includes one or more of at least one beam, at least one cell, and at least one satellite; and
an access unit 520, configured to perform the relevant operation based on the first information and/or the first signal; wherein the relevant operation includes one or more of: satellite handover, cell handover, roaming request, beam switching, cell access, and uplink/downlink synchronization.

Optionally, in the communication apparatus, the first signal includes one or more of: a primary synchronization signal, a secondary synchronization signal, and a synchronization signal block (SSB).

Optionally, in the communication apparatus, the first information includes one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

Optionally, in the communication apparatus, the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

Optionally, in the communication apparatus, that the access unit 520 performs the relevant operations based on the first information includes:
in a case that the service area and/or the coverage area determined based on the first information belongs to a restricted access area for the user equipment, performing the cell handover and/or the roaming request.

Optionally, in the communication apparatus, the first information is indicated by a resource location of the first signal in the at least one beam and/or the at least one cell; wherein, in a case that areas of the at least one beam and/or the at least one cell are different, the first signal is sent at different resource locations.

Optionally, in the communication apparatus, the configuration information includes:
correspondence relationship information, used for indicating a relationship between a resource location where the network device sends the first signal and at least one of a corresponding beam, cell, cell area, satellite service area, or satellite coverage area.

Optionally, in the communication apparatus, the configuration information includes one or more of the following:
one or more of: time information about when the first target object sends SSB, frequency domain location information about where the first target object sends SSB, SSB index information, and CSI-RS resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB includes one or more of: periodicity, start value, and duration.

Optionally, in the communication apparatus, the obtaining unit 510 is further configured to:
obtain the correspondence relationship information through a system message and/or dedicated signaling.

Optionally, in the communication apparatus, the obtaining unit 510 is further configured to:
differentiate, based on the configuration information, the different first target objects that send the same PCI and/or the same SSB sequence; and
perform a corresponding measurement and/or handover operation according to the differentiated first target objects.

Optionally, in the communication apparatus, the access unit 520 is further configured to:
based on one or more of the time difference, frequency offset, and phase difference between an SSB sent by a first satellite reaching the user equipment or the reference position and an SSB sent by a second satellite reaching the user equipment or the reference position, determine whether to merge results of separate measurements of the SSB sent by the first satellite and the SSB sent by the second satellite.

Optionally, in the communication apparatus, that the access unit 520, based on one or more of the time difference, frequency offset, and phase difference between an SSB sent by a first satellite reaching the user equipment or the reference position and an SSB sent by a second satellite reaching the user equipment or the reference position, determines whether to merge results of separate measurements of the SSB sent by the first satellite and the SSB sent by the second satellite includes:
in a case that a value of at least one of the time difference, frequency offset, or phase difference between the SSB sent by the first satellite reaching the user equipment or the reference position and the SSB sent by the second satellite reaching the user equipment or the reference position is less than or equal to a preset threshold, determining to merge the results of the separate measurements of the SSB sent by the first satellite and the SSB sent by the second satellite.

Optionally, in the communication apparatus, the access unit 520 is further configured to:
in a case that the value of at least one of the time difference, frequency offset, or phase difference between the SSB sent by the first satellite reaching the user equipment or the reference position and the SSB sent by the second satellite reaching the user equipment or the reference position is greater than the preset threshold, perform, on a signal sent by one of the first satellite and the second satellite, one or more of interference processing, puncturing processing, and signal filtering processing.

Optionally, in the communication apparatus, the access unit 520 obtains, based on the configuration information, multiple different measurement configurations configured by a serving cell to the user equipment according to one carrier/frequency band that correspond to areas served by different first target objects; or, obtains multiple different measurement configurations configured by the serving cell to the user equipment according to one carrier/frequency band; and
the access unit 520, based on the multiple different measurement configurations and the measurement configuration information, after performing differentiated measurements at corresponding resource locations, differentiates the different first target objects that send the same PCI and/or the same SSB sequence.

Optionally, in the communication apparatus, the at least one beam and/or the at least one cell each sends a beacon code, wherein the first information is indicated through the beacon code, and the beacon code varies when the service area and/or the coverage area provided by the at least one beam and/or the at least one cell varies.

Optionally, in the communication apparatus, the access unit 520 is further configured to:
determine, based on a first resource location for sending the first signal in the at least one beam and/or the at least one cell, a second resource location for sending the beacon code;
wherein the second resource location and the first resource location satisfy a quasi-colocation (QCL) relationship.

Optionally, in the communication apparatus, the access unit 520 is further configured to:
obtain a first correspondence relationship between the beacon code and the provided service area and/or coverage area through a system message; and
determine an indication area of the first information based on the first correspondence relationship and the beacon code.

Optionally, in the communication apparatus, the access stratum of the user equipment parses the beacon code in the at least one beam and/or the at least one cell;
a radio resource control (RRC) layer of the user equipment obtains the beacon code parsed by the access stratum and determines the corresponding indication area based on the beacon code;
a non-access stratum (NAS) of the user equipment obtains the indication area, determines whether the indication area belongs to a restricted access area for the user equipment, and determines whether to perform a corresponding relevant operation.

Optionally, in the communication apparatus, the access unit 520 is further configured to:
obtain a first threshold value for a signal measurement result obtained by the user equipment within an access allowed area;
determine whether a measurement result of a signal of the at least one beam and/or the at least one cell is greater than the first threshold value; and
in a case that the measurement result of the signal of the at least one beam and/or the at least one cell is greater than the first threshold value, and the service area and/or coverage area determined according to the first information in the at least one beam and/or the at least one cell belongs to the access allowed area of the user equipment, send a signal to the network device and/or receive a signal from the network device, and not perform the relevant operation.

Optionally, in the communication apparatus, the at least one beam and/or the at least one cell each sends a cell global identifier (CGI), the first information is indicated through the CGI, and the CGI varies when the service area and/or the coverage area provided by the at least one beam and/or the at least one cell varies.

An embodiment of this disclosure also provides a communication apparatus, applied to a network device, as shown in Fig. 6, the apparatus including:
a sending unit 610, configured to send first information and/or a first signal to a user equipment; wherein the first information and/or the first signal is used for determining a service area and/or a coverage area provided by a first target object, and/or the first information is used for indicating a relevant operation to be performed; wherein, the first target object includes one or more of: at least one beam, at least one cell and at least one satellite.

Optionally, in the communication apparatus, the first signal includes one or more of: a primary synchronization signal, a secondary synchronization signal, and a synchronization signal block (SSB).

Optionally, in the communication apparatus, the first information includes one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

Optionally, in the communication apparatus, the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

Optionally, in the communication apparatus, the first information is indicated by a resource location of the first signal in the at least one beam and/or the at least one cell; wherein, in a case that areas of the at least one beam and/or the at least one cell are different, the first signal is sent at different resource locations.

Optionally, in the communication apparatus, the configuration information includes:
correspondence relationship information, used for indicating a relationship between a resource location where the network device sends the first signal and at least one of a corresponding beam, cell, cell area, satellite service area, or satellite coverage area.

Optionally, in the communication apparatus, the configuration information includes one or more of the following:
one or more of: time information about when the first target object sends SSB, frequency domain location information about where the first target object sends SSB, SSB index information, and CSI-RS resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB includes one or more of: periodicity, start value, and duration.

Optionally, in the communication apparatus, the at least one beam and/or the at least one cell each sends a beacon code, wherein the first information is indicated through the beacon code, and the beacon code varies when the service area and/or the coverage area provided by the at least one beam and/or the at least one cell varies.

Optionally, the communication apparatus further includes:
a determining unit 620, configured to determine, based on a first resource location for sending the first signal in the at least one beam and/or the at least one cell, a second resource location for sending the beacon code;
wherein the second resource location and the first resource location satisfy a quasi-colocation (QCL) relationship.

Optionally, in the communication apparatus, the sending unit 610 is further configured to:
send a first correspondence relationship between the beacon code and the provided service area and/or coverage area through a system message.

Optionally, in the communication apparatus, the at least one beam and/or the at least one cell each sends a cell global identifier (CGI), wherein the first information is indicated through the CGI, and the CGI varies when the service area and/or the coverage area provided by the at least one beam and/or the at least one cell varies.

An embodiment of this disclosure further provides a user equipment, which includes a processor, a memory, and a program stored in the memory and executable on the processor, wherein the program, when executed by the processor, implements the foregoing communication method.

The specific implementation in which the program running on the processor of the user equipment performs the communication method can be found in the detailed description of the communication method performed by the user equipment, and will not be repeated here.

An embodiment of this disclosure further provides a network device, which includes a processor, a memory, and a program stored in the memory and executable on the processor, wherein the program, when executed by the processor, implements the foregoing communication method.

The specific implementation in which the program running on the processor of the network device performs the communication method can be found in the detailed description of the communication method performed by the network device, and will not be repeated here.

In addition, a specific embodiment of this disclosure further provides a readable storage medium having a computer program stored thereon, wherein the computer program, when executed by a processor, implements the steps of the communication method described above.

Specifically, the readable storage medium is applied to the aforementioned user equipment or network device. When applied to a user equipment or network device, the execution steps in the corresponding communication method are as described in detail above and will not be repeated here.

In the embodiments provided in this disclosure, it should be understood that the disclosed methods and apparatus can be implemented in other ways. For example, the apparatus embodiments described above are merely illustrative. For instance, the division of units is only a logical functional division, and in actual implementation, there may be other division methods. For example, multiple units or components may be combined or integrated into another system, or some features may be ignored or not executed. Furthermore, the coupling or direct coupling or communication connection shown or discussed may be through some interfaces, or indirect coupling or communication connection between devices or units, and may be electrical, mechanical, or other forms.

Furthermore, the functional units in the various embodiments of this disclosure can be integrated into one processing unit, or each unit can be physically included separately, or two or more units can be integrated into one unit. The integrated unit can be implemented in hardware or in the form of hardware plus software functional units.

The integrated units implemented as software functional units described above can be stored in a computer-readable storage medium. These software functional units, stored in a storage medium, include several instructions that cause a computer device (which may be a personal computer, server, or network device, etc.) to execute some steps of the communication methods described in the various embodiments of this disclosure. The storage medium includes various media capable of storing program code, such as USB flash drives, portable hard drives, read-only memory (ROM), random access memory (RAM), magnetic disks, or optical discs.

The above describes the preferred implementations of this disclosure. It should be noted that those skilled in the art can make various improvements and modifications without departing from the principles of this disclosure, and these improvements and modifications should also be considered as falling within the scope of this disclosure.

## Claims

1. A communication method, performed by a user equipment, comprising:
obtaining first information and/or a first signal sent by a network device; wherein the first information and/or the first signal is used for determining a service area and/or a coverage area provided by a first target object, and/or the first information is used for indicating a relevant operation to be performed; wherein, the first target object comprises one or more of: at least one beam, at least one cell and at least one satellite; and
performing the relevant operation based on the first information and/or the first signal; wherein the relevant operation comprises one or more of: satellite handover, cell handover, roaming request, beam switching, cell access, and uplink/downlink synchronization.

2. The communication method according to claim 1, wherein the first signal comprises one or more of: a primary synchronization signal, a secondary synchronization signal, and a synchronization signal block (SSB).

3. The communication method according to claim 1, wherein the first information comprises one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

4. The communication method according to claim 1 or 2, wherein the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

5. The communication method according to claim 1, wherein performing the relevant operation based on the first information comprises:
in a case that the service area and/or the coverage area determined based on the first information belongs to a restricted access area for the user equipment, performing the cell handover and/or the roaming request.

6. The communication method according to claim 1, wherein the first information is indicated by a resource location of the first signal in the at least one beam and/or the at least one cell; wherein, in a case that areas of the at least one beam and/or the at least one cell are different, the first signal is sent at different resource locations.

7. The communication method according to claim 3, wherein the configuration information indicated by the sixth information comprises:
correspondence relationship information, used for indicating a relationship between a resource location where the network device sends the first signal and at least one of a corresponding beam, cell, cell area, satellite service area, or satellite coverage area.

8. The communication method according to claim 3, wherein the configuration information indicated by the sixth information comprises one or more of the following:
one or more of: time information about when the first target object sends SSB, frequency domain location information about where the first target object sends SSB, SSB index information, and channel state information reference signal (CSI-RS) resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB comprises one or more of: periodicity, start value, and duration.

9. The communication method according to claim 7, further comprising:
obtaining the correspondence relationship information through a system message and/or dedicated signaling.

10. The communication method according to claim 3, further comprising:
differentiating, based on the configuration information indicated by the sixth information, different first target objects that send the same PCI and/or the same SSB sequence; and
performing a corresponding measurement and/or handover operation according to the differentiated first target objects.

11. The communication method according to claim 8, further comprising:
based on one or more of the time difference, frequency offset, and phase difference between an SSB sent by a first satellite reaching the user equipment or the reference position and an SSB sent by a second satellite reaching the user equipment or the reference position, determining whether to merge results of separate measurements of the SSB sent by the first satellite and the SSB sent by the second satellite.

12. The communication method according to claim 11, wherein, based on one or more of the time difference, frequency offset, and phase difference between an SSB sent by a first satellite reaching the user equipment or the reference position and an SSB sent by a second satellite reaching the user equipment or the reference position, determining whether to merge results of separate measurements of the SSB sent by the first satellite and the SSB sent by the second satellite comprises:
in a case that a value of at least one of the time difference, frequency offset, or phase difference between the SSB sent by the first satellite reaching the user equipment or the reference position and the SSB sent by the second satellite reaching the user equipment or the reference position is less than or equal to a preset threshold, determining to merge the results of the separate measurements of the SSB sent by the first satellite and the SSB sent by the second satellite.

13. The communication method according to claim 12, further comprising:
in a case that the value of at least one of the time difference, frequency offset, or phase difference between the SSB sent by the first satellite reaching the user equipment or the reference position and the SSB sent by the second satellite reaching the user equipment or the reference position is greater than the preset threshold, the user equipment performs, on a signal sent by one of the first satellite and the second satellite, one or more of interference processing, puncturing processing, and signal filtering processing.

14. The communication method according to claim 10, wherein, differentiating, based on the configuration information, different first target objects that send the same PCI and/or the same SSB sequence comprises:
based on the configuration information indicated by the sixth information, obtaining multiple different measurement configurations configured by a serving cell to the user equipment according to one carrier/frequency band that correspond to areas served by different first target objects; or, obtaining multiple different measurement configurations configured by the serving cell to the user equipment according to one carrier/frequency band; and
based on the multiple different measurement configurations and the measurement configuration information indicated by the seventh information, after performing differentiated measurements at corresponding resource locations, differentiating the different first target objects that send the same PCI and/or the same SSB sequence.

15. The communication method according to claim 1, wherein the at least one beam and/or the at least one cell each sends a beacon code, the first information is indicated through the beacon code, and the beacon code varies when the service area and/or the coverage area provided by the at least one beam and/or the at least one cell varies.

16. The communication method according to claim 15, further comprising:
determining, based on a first resource location for sending the first signal in the at least one beam and/or the at least one cell, a second resource location for sending the beacon code;
wherein the second resource location and the first resource location satisfy a quasi-colocation (QCL) relationship.

17. The communication method according to claim 15, further comprising:
obtaining a first correspondence relationship between the beacon code and the provided service area and/or coverage area through a system message; and
determining an indication area of the first information based on the first correspondence relationship and the beacon code.

18. The communication method according to claim 15, further comprising:
an access stratum (AS) of the user equipment parses the beacon code sent by the at least one beam and/or the at least one cell;
a radio resource control (RRC) layer of the user equipment obtains the beacon code parsed by the access stratum and determines the corresponding indication area based on the beacon code;
a non-access stratum (NAS) of the user equipment obtains the indication area, determines whether the indication area belongs to a restricted access area for the user equipment, and determines whether to perform a corresponding relevant operation.

19. The communication method according to claim 1, further comprising:
obtaining a first threshold value for a signal measurement result obtained by the user equipment within an access allowed area;
determining whether a measurement result of a signal of the at least one beam and/or the at least one cell is greater than the first threshold value; and
in a case that the measurement result of the signal of the at least one beam and/or the at least one cell is greater than the first threshold value, and the service area and/or coverage area determined according to the first information in the at least one beam and/or the at least one cell belongs to the access allowed area of the user equipment, sending a signal to the network device and/or receiving a signal from the network device, and not performing the relevant operation.

20. The communication method according to claim 1, wherein the at least one beam and/or the at least one cell each sends a cell global identifier (CGI), the first information is indicated through the CGI, and the CGI varies when the service area and/or the coverage area provided by the at least one beam and/or the at least one cell varies.

21. A communication method, performed by a network device, comprising:
sending first information and/or a first signal to a user equipment; wherein the first information and/or the first signal is used for determining a service area and/or a coverage area provided by a first target object, and/or the first information is used for indicating a relevant operation to be performed; wherein, the first target object comprises one or more of: at least one beam, at least one cell and at least one satellite.

22. The communication method according to claim 21, wherein the first signal comprises one or more of: a primary synchronization signal, a secondary synchronization signal, and a synchronization signal block (SSB).

23. The communication method according to claim 21, wherein the first information comprises one or more of the following:
second information, used for indicating area information of the service area and/or the coverage area provided by the first target object;
third information, used for indicating information about change of a satellite that provides coverage and/or services to the user equipment;
fourth information, used for indicating information about a satellite that provides coverage and/or services to the user equipment after satellite handover;
fifth information, used for indicating the relevant operation to be performed by the user equipment;
sixth information, used for indicating configuration information for the first target object to provide services and/or coverage;
seventh information, used for indicating measurement configuration information for the user equipment to measure the first target object.

24. The communication method according to claim 21 or 22, wherein the first signal satisfies one or more of the following:
the first signals corresponding to different obtained beams are the same;
the first signals corresponding to different areas of the at least one cell are the same;
the first signals corresponding to service areas and/or coverage areas provided by different satellites are the same.

25. The communication method according to claim 21, wherein the first information is indicated by a resource location of the first signal in the at least one beam and/or the at least one cell; wherein, in a case that areas of the at least one beam and/or the at least one cell are different, the first signal is sent at different resource locations.

26. The communication method according to claim 23, wherein the configuration information indicated by the sixth information comprises:
correspondence relationship information, used for indicating a relationship between a resource location where the network device sends the first signal and at least one of a corresponding beam, cell, cell area, satellite service area, or satellite coverage area.

27. The communication method according to claim 23, wherein the configuration information indicated by the sixth information comprises one or more of the following:
one or more of: time information about when the first target object sends SSB, frequency domain location information about where the first target object sends SSB, SSB index information, and CSI-RS resource information;
one or more of time difference, frequency offset, and phase difference between SSBs, sent by the at least one satellite, reaching the user equipment or a reference position;
time information about when the first target object provides and/or stops service;
wherein the time information about when the first target object sends SSB comprises one or more of: periodicity, start value, and duration.

28. The communication method according to claim 21, wherein the at least one beam and/or the at least one cell each sends a beacon code, the first information is indicated through the beacon code, and the beacon code varies when the service area and/or the coverage area provided by the at least one beam and/or the at least one cell varies.

29. The communication method according to claim 28, further comprising:
determining, based on a first resource location for sending the first signal in the at least one beam and/or the at least one cell, a second resource location for sending the beacon code;
wherein the second resource location and the first resource location satisfy a quasi-colocation (QCL) relationship.

30. The communication method according to claim 28, further comprising:
sending a first correspondence relationship between the beacon code and the provided service area and/or coverage area through a system message.

31. The communication method according to claim 21, wherein the at least one beam and/or the at least one cell each sends a cell global identifier (CGI), the first information is indicated through the CGI, and the CGI varies when the service area and/or the coverage area provided by the at least one beam and/or the at least one cell varies.

32. A user equipment, comprising a transceiver and a processor, wherein,
the transceiver is used for obtaining first information and/or a first signal sent by a network device; wherein the first information and/or the first signal is used for determining a service area and/or a coverage area provided by a first target object, and/or the first information is used for indicating a relevant operation to be performed; wherein, the first target object comprises one or more of at least one beam, at least one cell, and at least one satellite;
the processor is used for performing the relevant operation based on the first information and/or the first signal; wherein the relevant operation comprises one or more of: satellite handover, cell handover, roaming request, beam switching, cell access, and uplink/downlink synchronization.

33. A network device, comprising a transceiver, wherein the transceiver is used for:
sending first information and/or a first signal to a user equipment; wherein the first information and/or the first signal is used for determining a service area and/or a coverage area provided by a first target object, and/or the first information is used for indicating a relevant operation to be performed; wherein, the first target object comprises one or more of: at least one beam, at least one cell and at least one satellite.

34. A communication apparatus, applied to a user equipment, comprising:
an obtaining unit, configured to obtain first information and/or a first signal sent by a network device; the first information and/or the first signal is used for determining a service area and/or a coverage area provided by a first target object, and/or the first information is used for indicating a relevant operation to be performed; wherein, the first target object comprises one or more of at least one beam, at least one cell, and at least one satellite;
an access unit, configured to perform the relevant operation based on the first information and/or the first signal; wherein the relevant operation comprises one or more of: satellite handover, cell handover, roaming request, beam switching, cell access, and uplink/downlink synchronization.

35. A communication apparatus, applied to a network device, comprising:
a sending unit, configured to send first information and/or a first signal to a user equipment; wherein the first information and/or the first signal is used for determining a service area and/or a coverage area provided by a first target object, and/or the first information is used for indicating a relevant operation to be performed; wherein, the first target object comprises one or more of: at least one beam, at least one cell and at least one satellite.

36. A user equipment comprising a processor, a memory, and a program stored in the memory and executable on the processor, wherein the program, when executed by the processor, implements the communication method according to any one of claims 1 to 20.

37. A network device comprising a processor, a memory, and a program stored in the memory and executable on the processor, wherein the program, when executed by the processor, implements the communication method according to any one of claims 21 to 31.

38. A readable storage medium storing a program, wherein the program, when executed by a processor, implements the steps of the communication method according to any one of claims 1 to 20, or implements the steps of the communication method according to any one of claims 21 to 31.
